(19) Europäisches Patentamt
European Patent Office
Office européen des brevets

(11) Veröffentlichungsnummer: **0 234 434**
**A2**

(12) **EUROPÄISCHE PATENTANMELDUNG**

(21) Anmeldenummer: **87101997.2**

(22) Anmeldetag: **12.02.87**

(51) Int. Cl.³: **C 08 L 77/00**
C 08 L 69/00, C 08 L 71/00

(30) Priorität: **21.02.86 DE 3605573**

(43) Veröffentlichungstag der Anmeldung:
**02.09.87 Patentblatt 87/36**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Lausberg, Dietrich, Dr.**
**Nachtigalstrasse 32 a**
**D-6700 Ludwigshafen(DE)**

(72) Erfinder: **Reimann, Horst, Dr.**
**Adelheidstrasse 26**
**D-6520 Worms 1(DE)**

(54) **Thermoplastische Formmassen auf der Basis von Polyamiden und Polycarbonaten.**

(57) Thermoplastische Formassen auf der Basis von
A) Polyamiden und
B) Polycarbonaten
mit einem Gehalt von 0,1-30 Gew.%
C) eines Polymeren mit Hydroxylgruppen –OH.

Die Formmassen zeichnen sich durch eine gute Oberflächen beschaffenheit und eine gute Schlagzähigkeit, besonders in der Kälte, aus.



Croydon Printing Company Ltd.

Thermoplastische Formmassen auf der Basis von Polyamiden und Polycarbonaten

Die Erfindung betrifft thermoplastische Formmassen auf der Basis von

A) Polyamiden und
B) Polycarbonaten.

Weiterhin betrifft die Erfindung die Verwendung derartiger Formmassen zur Herstellung von Formkörpern und die aus den Formmassen erhältlichen Formkörper.

Spritzfrische Polyamide (insbesondere teilkristalline) erreichen ihre maximale Zähigkeit erst nach einer Konditionierung durch Wasseraufnahme. Dies kann auf einfache Weise durch Lagern an der Luft erfolgen. Dieser Vorgang ist jedoch langwierig, weshalb es üblich ist, fertige Polyamid-Formteile mit Wasser zu behandeln, bis diese etwa 3 % Wasser aufgenommen haben. Dies geschieht in der Regel durch Behandlung der Formteile mit warmem Wasser in Tauchbecken.

Ein Wassergehalt von 3 % entspricht etwa der Wasseraufnahme bei 50 % relativer Luftfeuchtigkeit. Um eine gleichmäßige Verteilung der oberflächlich eingedrungenen Wassermoleküle im Formteil zu gewährleisten, ist häufig noch eine längere Lagerung bei hoher Luftfeuchtigkeit erforderlich.

Aus dem Vorstehenden wird deutlich, daß insbesondere bei Formteilen, die in hohen Stückzahlen hergestellt werden, ein erheblicher Energie-, Zeit- und Investitionsaufwand erforderlich ist.

Es hat daher nicht an Versuchen gefehlt, die aufwendige Wasserkonditionierung durch Zusatz niedermolekularer oder hochmolekularer Modifikatoren, z.B. von Weichmachern, zu eliminieren und auf diese Weise sofort nach der Verarbeitung schlagzähe Polyamide zu erhalten.

Die Bemühungen konzentrierten sich überwiegend auf das Auffinden hochmolekularer Schlagzähigkeitsverbesserer, im folgenden als Schlagzähigkeitsmodifikatoren bezeichnet. In der JA 52/104567 (1977) werden Polyethylen oder Ethylen-Vinylacetat-Copolymerisate zur Verbesserung der Kerbschlagzähigkeit von Polyamiden empfohlen, doch zeigen die aus den Mischungen hergestellten Formkörper aufgrund der Unverträglichkeit der beteiligten Polymeren ein unbefriedigendes Elastizitätsverhalten (Neigung zum Weißbruch) und es tritt eine erhebliche Abnahme der Fließfähigkeit ein.

Mischungen von Polyamiden mit Polycarbonaten sind in der Literatur ebenfalls beschrieben, z.B. in der JA 59/68368 (1984) für Uhrengehäuse und in der JA 49/33103 (1974) und 51/30255 (1976) als Perlmutt-Ersatz.

In der JA 50/116541 (1975) und der JA 50/1147 (1975) wird ausgeführt, daß Mischungen aus Polycarbonat und Nylon 12 gute dielektrische Eigenschaften aufweisen. Alle Mischungen zeigen jedoch eine ausgeprägte Tendenz zu schichtweisen Spaltungen (Delaminierungen) in daraus hergestellten Formkörpern.

In der DE-A 33 32 924 schließlich wird ausgeführt, daß Mischungen aus Polyamiden und Polycarbonaten bei der Herstellung sehr stark schäumen, worauf auch die Verwendung derartiger Mischungen zur Herstellung von Polyamid-Schäumen beruht (z.B. JA 48/28350 (1973) und JA 57/16033 (1982)).

Aufgabe der vorliegenden Erfindung war es daher, thermoplastische Formmassen aus Polyamiden und Polycarbonaten zur Verfügung zu stellen, die keine Delaminierung in daraus hergestellten Formkörpern zeigen.

Diese Aufgabe wird erfindungsgemäß gelöst durch thermoplastische Formmassen auf der Basis von

A) Polyamiden und

B) Polycarbonaten,

die durch einen Gehalt von 0,1-30 Gew. %, bezogen auf A) - C)
C) einer polymeren Komponente mit Hydroxylgruppen-OH

gekennzeichnet sind.

Bevorzugte Massen dieser Art sind den Unteransprüchen zu entnehmen.

Als Komponente A) enthalten die erfindungsgemäßen thermoplastischen Formmassen ein Polyamid oder Mischungen aus mehreren Polyamiden. Geeignet sind grundsätzlich teilkristalline und amorphe Polyamide, es werden jedoch teilkristalline Polyamide bevorzugt, da die daraus hergestellten Formmassen in der Regel solchen aus amorphen Polyamiden hinsichtlich der Wärmeform- und Spannungsrißbeständigkeit überlegen sind. Erfindungsgemäß einsetzbare Polyamide sind an sich bekannt und umfassen z.B. Polyamide mit Molekulargewichten von 5000 oder mehr, wie sie z.B. in den US-Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure mit 4 bis 12 Kohlenstoffatomen, mit einem Diamin, welches 4 bis 14 Kohlenstoffatome aufweist, hergestellt werden, oder durch Kondensation von omega-Aminocarbonsäuren oder durch Polyaddition von Lactamen. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactam erhaltenen Polyamide, wie Polycaprolactam, Polylaurinsäurelactam, ferner Poly-11-aminoundecansäure und Di-(p-aminocyclohexyl)-methandodecandisäureamid. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200°C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 %igen Lösung in $H_2SO_4$ bei 23°C, was einem Molekulargewicht von etwa 15000-45000 entspricht. Selbstverständlich können auch Mischungen von Polyamiden eingesetzt werden. Der Anteil des Polyamids A) an den erfindungsgemäßen Formmassen ist nicht kritisch, doch werden vorzugsweise mindestens 2 Gew. % Polyamid, bezogen auf das Gesamtgewicht A) - C) eingesetzt. Formmassen mit einem Gehalt von 20-78, insbesondere 30-65 Gew.% an Polyamid werden besonders bevorzugt.

Die erfindungsgemäß verwendbaren Polycarbonate B) sind an sich ebenfalls bekannt. Deren Herstellung kann z.B. nach dem Verfahren der DE-PS 1 300 266 durch Grenzflächenpolykondensation oder nach der DE-OS 1 495 730 durch Umsetzung von Diphenylcarbonat mit Bisphenol A (2,2-Di-(4-hydroxyphenyl)propan) erfolgen. Anstelle von Bisphenol A können auch andere Dihydroxyverbindungen eingesetzt werden, wie z.B. 2,2-Di(4-hydroxyphenyl)pentan, 2,6-Dihydroxynaphthalin, Di-(4-hydroxyphenyl)-sulfon, Di-(4-hydroxyphenyl)ether, Di-(4-hydroxyphenyl)sulfit, Di-(4-hydroxyphenyl)methan, 1,1-Di-(4-hydroxyphenyl)ethan und 4,4-Dihydroxydiphenyl, um nur einige zu nennen, die sich als besonders vorteilhaft herausgestellt haben. Weitere geeignete Verbindungen sind z.B. der Monographie von H. Schnell, Chemistry and Physics of Polycarbonates, (Interscience Publishers, 1964) zu entnehmen. Selbstverständlich können auch Mischungen verschiedener Dihydroxyverbindungen eingesetzt werden.

Besonders geeignet sind aromatische Polycarbonate mit einer relativen Viskosität von 1,2-1,5, insbesondere von 1,28-1,40 (gemessen an einer 0,5 %igen Lösung in Dichlormethan bei 25°C).

Der Gehalt der erfindungsgemäßen Formmassen an der Komponente B) ist wie der der Komponente A) an sich nicht kritisch, beträgt aber im allgemeinen mindestens 2 Gew.%; Gehalte von 20-78, insbesondere 30-65 Gew.% B), bezogen auf das Gesamtgewicht der Komponenten A) - C) werden bevorzugt.

Als wesentliche Komponente C) enthalten die erfindungsgemäßen Formmassen eine polymere Komponente mit Hydroxylgruppen -OH. Die im Rahmen der Erfindung durchgeführten Versuche ergaben, daß prinzipiell jede Gruppe mit Protonendonatoreigenschaften geeignet sein sollte, daß sich jedoch Gruppen mit der Struktureinheit -OH besonders gut eignen. Die verträglichkeitsverbessernde Wirkung der Komponente C beruht aller Wahrscheinlichkeit nach darauf, daß zwischen der Komponente C und den Komponenten A) und B) Wechselwirkungen, zum Beispiel H-Brückenbindungen auftreten, die eine bessere Haftung der Phasen aneinander bewirken.

Wie bereits erwähnt, sind prinzipiell alle Polymere mit Hydroxylgruppen, die im wesentlichen frei zur Verfügung stehen, geeignet. Es ist natürlich darauf zu achten, daß die Komponenten A) und B) gegenüber der Komponente C stabil sind. Dies ist insbesondere bei Verwendung von Verbindungen mit sauren -OH-Gruppen zu beachten.

Unter Beachtung dieser Voraussetzungen haben sich einige Gruppen von Verbindungen als besonders vorteilhaft herausgestellt, die nachfolgend beschrieben werden. Es ist jedoch grundsätzlich möglich, auch andere Komponenten C einzusetzen, solange die Stabilität der Komponenten A) und B) nicht darunter leidet.

Die erste Gruppe besonders geeigneter Polymerer sind Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Nur als Beispiele seien hier die Polykondensate aus Epihalogenhydrinen und den Dihydroxyverbindungen, die auch zur Herstellung der Polycarbonate B) eingesetzt werden können, genannt, die sich als besonders vorteilhaft herausgestellt haben. Daneben sind aber grundsätzlich auch andere, insbesondere aliphatische Diole oder höherwertige aromatische oder aliphatische Alkohole geeignet.

Wegen der leichten Zugänglichkeit wird ein Polykondensat aus Bisphenol A und Epichlorhydrin mit der Struktur

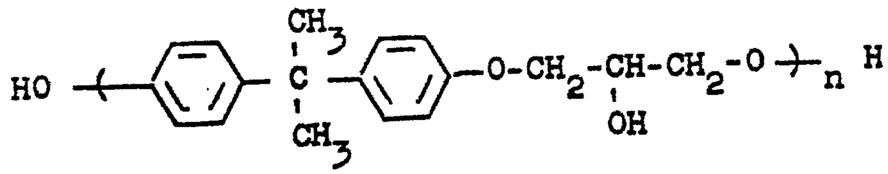

bevorzugt verwendet.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymere als Pfropfgrundlagen geeignet sind, die mit den Komponenten A) und B) nicht vollkommen unverträglich sind. Ein gewisser Grad an Unverträglichkeit kann durch eine Erhöhung des Anteils der Hydroxylgruppen ausgeglichen werden.

Geeignete Komponenten C) sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere mit den Komponenten A) und B) ist. Je besser die Verträglichkeit, desto geringer kann der Anteil der OH-Gruppen sein. Aus dem Vorstehenden ergibt sich, daß eine Vielzahl von polymeren Verbindungen als Komponente C geeignet sind, von denen nachfolgend nur als Beispiel einige besonders bevorzugte Arten näher vorgestellt werden.

Die erste Gruppe sind Polymere und Copolymere mit einem Gehalt von bis zu 100 mol % Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien Polymere auf der Basis von Vinylphenolen und Copolymeren der bereits genannten Pfropfgrundlagen und Basispolymeren mit Vinylphenolen genannt, die am Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Daneben sind grundsätzlich Polymere und Copolymere mit allen polymerisierbaren oder pfropfbaren Alkoholen zu nennen.

Es sei erwähnt, daß Polymere mit OH-Hydroxylgruppen auf der Basis von Polyamiden oder Polycarbonaten besonders bevorzugt sind, da hier die Verträglichkeit mit mindestens der Komponente A) oder B) von vornherein gegeben ist, so daß der Anteil der OH-Gruppen gesenkt werden kann.

Die Herstellung der Komponente C) kann nach üblichen Verfahren zur Polykondensation bzw. Pfropf- oder Copolymerisation erfolgen, weshalb sich hier nähere Angaben erübrigen.

Der Anteil der Komponente C an den erfindungsgemäßen Formmassen liegt im Bereich von 0,1-30 Gew.%, bezogen auf das Gesamtgewicht der Komponenten A) - C) und hängt von der Verträglichkeit des Basispolymeren der Komponente C mit den Komponenten A) und B) ab. Im allgemeinen haben sich Anteile von 1-25, insbesondere von 3-20 Gew.% als besonders vorteilhaft herausgestellt.

Neben den Komponenten A) - C) können die erfindungsgemäßen Formmassen noch Zusätze zur Verbesserung der Schlagzähigkeit und übliche Zusatzstoffe und Verarbeitungshilfsmittel enthalten. Schlagzähigkeitsverbessernde Elastomere für Polyamide bzw. Polycarbonate sind dem Fachmann an sich bekannt, deshalb erübrigen sich hier detaillierte Angaben. Nur beispielsweise seien Kautschuke auf Ethylen-, Propylen-, Butadien- oder

Acrylatbasis oder Mischungen dieser Monomeren genannt. Der Anteil solcher Schlagzähigkeitsverbesserer beträgt im allgemeinen nicht mehr als 40 Gew.%, insbesondere bis zu 30 Gew.%, bezogen auf das Gesamtgewicht der Komponenten A) - C).

Unter den weiteren Zusatzstoffen seien ebenfalls nur als Beispiele Gleit- und Entformungsmittel, Nukleierungsmittel, Pigmente, Flammschutzmittel, Farbstoffe, Stabilisatoren, Kristallisationsbeschleuniger, faser- und pulverförmige Füll- und Verstärkungsmittel und Antistatika genannt, die in den üblichen Mengen zugesetzt werden.

Die Herstellung der erfindungsgemäßen Formmassen kann nach an sich bekannten Mischverfahren z.B. durch Einarbeiten des Polycarbonats in das Polyamid bei Temperaturen oberhalb des Schmelzpunkts des Polyamids erfolgen, insbesondere bei Temperaturen von 220 - 300°C, besonders bei 230 - 280°C, in üblichen Mischvorrichtungen, wie Extrudern, Knetern und Mischern.

Aus den erfindungsgemäßen Formmassen lassen sich leicht Formkörper mit guter Oberflächenbeschaffenheit und verbesserter Schlagzähigkeit bei hoher Steifigkeit, insbesondere bei tiefen Temperaturen, herstellen. Weder im Formkörper noch in der Schmelze tritt eine Entmischung der Polymerkomponenten ein.

## Beispiele

Zur Herstellung von erfindungsgemäßen thermoplastischen Formmassen wurden folgende Ausgangsstoffe eingesetzt.

Komponente A (Polyamide):

A 1: Polyhexamethylenadipinamid mit einer relativen Viskosität von 3,31, gemessen an einer 1 %igen Lösung in 96 % $H_2SO_4$ bei 25°C

A 2: Polycaprolactam mit einer relativen Viskosität von 4,0 (gemessen wie bei A 1)

A 3: Polyhexamethylensebacinsäureamid mit einer relativen Viskosität von 3,23 (gemessen wie bei A 1)

Komponente B:

B 1: Polycarbonat aus Basis von 2,2-Di-(4-Hydroxyphenyl)propan (Bisphenol A) mit einer relativen Viskosität von 1,36, gemessen an einer 0,5 %igen Lösung in Dichlormethan bei 25°C.

Komponente C:

C 1: Polykondensat aus 2,2-Di-(4-Hydroxyphenyl)propan und Epichlorhydrin (Phenoxy™, Union Carbide) mit einer relativen Viskosität von 1,13, gemessen wie unter B 1 beschrieben.

Struktur:

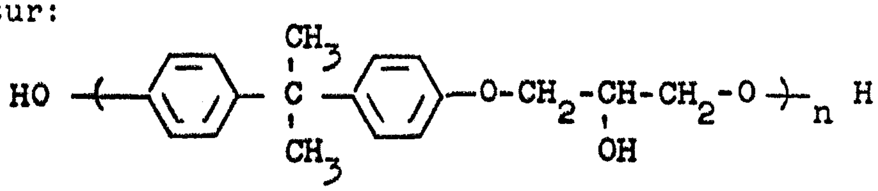

In Versuch 8 wurde zusätzlich zur Verbesserung der Schlagzähigkeit ein Pfropfkautschuk mit einer Pfropfgrundlage aus Polybutadien (75 %) und einer Pfropfhülle (25 %) eines Copolymeren aus Styrol und Acrylnitril (Gew.-Verh. 75/25) eingesetzt, welcher durch Emulsionspolymerisation in an sich bekannter Weise hergestellt wurde.

Die Formmassen wurden hergestellt, in dem die Komponenten intensiv gemischt, in einem Zweischneckenextruder bei 250°C (ZDSK 28, Werner & Pfleiderer) aufgeschmolzen, homogenisiert und in ein Wasserbad extrudiert wurden. Nach Granulierung und Trocknung wurde die Mischung auf einer Spritzgußmaschine zu Prüfkörpern geformt und diese ohne weitere Nachbehandlung untersucht.

Die Lochkerbschlagzähigkeit wurde nach DIN 53753 bestimmt. Die Ergebnisse sind in Tabelle 1 mit der Zusammensetzung der einzelnen Formmassen aufgeführt (alle %-Angaben beziehen sich auf das Gewicht).

Tabelle 1

| Versuch-Nummer | Komp. A % | Komp. B % | Komp. C % | K1) % | Lochkerbschlag-zähigkeit(kJ/m²) 23°C | -20°C | -40°C |
|---|---|---|---|---|---|---|---|
| 1* | 50 A 1 | 50 | - | - | 4,0 | 3,2 | 2,1 |
| 2* | 50 A 2 | 50 | - | - | 6,0 | 5,2 | 4,1 |
| 3* | 50 A 3 | 50 | - | - | 64 | 20 | 15 |
| 4 | 45 A 1 | 45 | 10 | - | 90 | 78 | 52 |
| 5 | 48 A 2 | 48 | 4 | - | 60 | 30 | 20 |
| 6 | 45 A 2 | 45 | 10 | - | 124 | 80 | 55 |
| 7 | 45 A 3 | 45 | 10 | - | 110 | 100 | 90 |
| 8 | 45 A 3 | 45 | 5 | 5 | 121 | 115 | 98 |

1) Pfropfkautschuk, wie oben beschrieben

* Vergleichsbeispiele

Die Ergebnisse in der Tabelle zeigen, daß die erfindungsgemäßen thermoplastischen Formmassen sich im Vergleich zu den bekannten Polyamid/Polycarbonat-Gemischen durch eine deutlich bessere Lochkerbschlagzähigkeit auszeichnen. Für die biaxiale Schlagzähigkeit sind ähnliche Ergebnisse zu erwarten.

## Patentansprüche

1. Thermoplastische Formmassen auf der Basis von
   A) Polyamiden und
   B) Polycarbonaten

   gekennzeichnet durch einen Gehalt von 0,1-30 Gew.%, bezogen auf A) - C),
   C) einer polymeren Komponente mit Hydroxylgruppen -OH.

2. Thermoplastische Formmassen nach Anspruch 1, dadurch gekennzeichnet, daß das Polymere C) ein Polykondensat aus aliphatischen und/oder aromatischen mehrwertigen Alkoholen mit Epihalogenhydrinen oder ein Polymeres, enthaltend 0,1-100 mol-% eines Alkohols mit Vinylphenylsubstituenten ist.

3. Thermoplastische Formmassen, nach Anspruch 2, dadurch gekennzeichnet, daß der Alkohol mit Vinylphenylsubstituenten ein Vinylphenol und/oder ein Vinylphenylcarbinol ist.

4. Thermoplastische Formmassen nach den Ansprüchen 1 bis 3, gekennzeichnet durch einen zusätzlichen Gehalt einer elastomeren Komponente.

5. Thermoplastische Formmassen nach den Ansprüchen 1-4, dadurch gekennzeichnet, daß das Polyamid A) ein teilkristallines Polyamid ist.

6. Verwendung der Formmassen nach den Ansprüchen 1 - 5 zur Herstellung von Formkörpern.

7. Formkörper, erhältlich aus Formmassen nach den Ansprüchen 1-5 als wesentlichen Komponenten.